# EUROPEAN PATENT SPECIFICATION

(11) **EP 3 656 709 B1**
(45) Date of publication and mention of the grant of the patent: **05.01.2022**
(21) Application number: 18208122.4
(22) Date of filing: 23.11.2018
(51) Int. Cl.: B65G 47/96, B65G 54/02, B65G 47/76

(54) **FLOW CONTROL IN A SYSTEM FOR PRODUCTION OF PACKAGED FOOD PRODUCTS**
FLUSSSTEUERUNG IN EINEM SYSTEM ZUR HERSTELLUNG VON VERPACKTEN LEBENSMITTELPRODUKTEN
RÉGULATION DE FLUX DANS UN SYSTÈME DE PRODUCTION DE PRODUITS ALIMENTAIRES CONDITIONNÉS

(43) Date of publication of application: 27.05.2020
(73) Proprietor: Tetra Laval Holdings & Finance S.A., 1009 Pully (CH)
(72) Inventor: BORGHI, Davide, 41121 Modena (IT); FLORE, Stefano, 40133 Bologna (IT); SACCHETTI, Elena, 42015 Correggio (IT); ROSSI, Stefano, IT-42123 Reggio Emilia (IT)
(74) Representative: Tetra Pak - Patent Attorneys SE

(56) References cited:
- EP-A2- 0 839 739
- WO-A1-2015/162182
- DE-A1-102014 117 150
- DE-A1-102016 109 435
- FR-A5- 2 087 171
- US-A1- 2005 263 369
- US-A1- 2011 127 142
- US-B1- 6 360 673
- US-B1- 8 857 625

## Description

### Technical Field

The invention generally relates to systems or plants for production of packaged food products.

### Background Art

The ever-growing demand of packaged food products causes a need for food producers to make more frequent changes in their production. Such changes include changing the production flow between different machines in a plant for production of packaged food products. With the packaging lines traditionally being used, such changes may be both expensive and time consuming to implement since they generally involve manual reconfiguration of the mechanical structure of machines and conveyors within the production plant.

Thus, there is a general need to facilitate changes in the production flow within plants for production of packaged food products.

It is also a general need to simplify the mechanical structure of machines and conveyors within the production plant. The document DE 10 2014 117150 A1 discloses an apparatus according to the preamble of claim 1. Said document further discloses a method of transporting products, said method comprising: arranging one or more of the products on a support surface of a respective carrier on a transportation track, operating one of a first magnetic arrangement in the transportation track and a second magnetic arrangement in the respective carrier to generate a movement of the respective carrier in a feed direction on the transportation track, determining that a selected carrier is located at a diversion location along the transportation track and controlling the respective carrier to intermittently tilt the support surface to slide the one or more products along the support surface.

### Summary

It is an object of the invention to at least partly overcome one or more limitations of the prior art.

One such object is to provide a technique that makes distribution of containers simpler and more flexible within a system for production of packaged food products.

One or more of these objects, as well as further objects that may appear from the description below, are at least partly achieved by an apparatus for transporting containers, a method of transporting containers, and a computer-readable medium according to the independent claims, embodiments thereof being defined by the dependent claims.

A first aspect of the invention is an apparatus for transporting containers in a system for production of packaged food products according to claim 1.

In one embodiment, the control device is configured to intermittently tilt the support surface of the selected carrier while controlling the selected carrier to move in the feed direction.

In one embodiment, the control device is configured to adapt the speed of the selected carrier in the feed direction to the speed of the conveyor in the feed direction at the diversion location.

In one embodiment, the guiding element is stationary and arranged to guide the selected carrier when moving in the feed direction.

In one embodiment, the transportation track is arranged with the feed direction in parallel to the conveyor at the diversion location, and wherein the control device is configured to intermittently tilt the support surface of the selected carrier in a lateral direction which is perpendicular to the feed direction.

In one embodiment, the support surface of the selected carrier is configured with a lower friction coefficient in the lateral direction than in the feed direction.

In one embodiment, the transportation track is arranged with the feed direction being transverse to the conveyor at the diversion location, wherein the control device is configured to stop the selected carrier at the diversion location and intermittently tilt the support surface of the selected carrier in the feed direction.

In one embodiment, the control device is configured to operate at least one of the first and second magnetic arrangements to tilt the selected carrier.

In one embodiment, the respective carrier comprises a moveable platform that defines at least part of the support surface and a platform actuator for moving the platform in relation to the carrier, wherein the control device is configured to operate the platform actuator to tilt the support surface of the selected carrier.

In one embodiment, the respective carrier comprises a gripping mechanism for engaging the one or more containers on the support surface, and wherein the control device is configured to intermittently deactivate the gripping mechanism of the selected carrier to release the container when the support surface is tilted.

In one embodiment, the first magnetic arrangement comprises an array of coils, and the second magnetic arrangement comprises an array of magnets.

In one embodiment, the control device is further configured to operate at least one of the first and second magnetic arrangements to levitate the respective carrier over the transportation track during the movement in the feed direction.

A second aspect of the invention is a method of transporting containers in a system for production of packaged food products according to claim 13.

Any one of said embodiments of the first aspect may be adapted and implemented as an embodiment of the second aspect.

A third aspect of the invention is a computer-readable medium comprising computer instructions which, when executed by a processing device, cause the processing device to perform the method of the second aspects or any of its embodiments.

### Brief Description of the Drawings

FIG. 1 a perspective view of an example plant for production of packaged food products.
FIG. 2A is an elevated side view of an apparatus for transportation of containers during production of packaged food products, and FIG. 2B is a perspective view of a carrier in the apparatus of FIG. 2A.
FIGS 3A-3F are elevated side views of embodiments of the carrier in FIG. 2B for enabling change of elevation, rotation and tilting of a container.
FIGS 4A-4D are elevated side views of examples of gripping mechanisms for holding a container on a carrier.
FIG. 5 illustrates, in perspective view, an operation for diverting moving containers on a transportation track onto adjacent conveyors.
FIGS 6A-6B illustrate, in elevated side view, an operation for diverting a container onto a conveyor.
FIG. 7 illustrate, in top plan view, an operation for diverting a moving container onto a conveyor.
FIG. 8 is a top plan view of a carrier with a preferential sliding direction.
FIG. 9 illustrate, in top plan view, an operation for diverting a container onto a conveyor.
FIG. 10 is a flow chart of a transportation method in accordance with an embodiment.

### Detailed Description

The invention is defined by the independent claims. Embodiments of the invention become apparent from the dependent claims.

As used herein, the term "food product" comprises any substance that can be used or prepared for use as food by humans or animals. Such food products include, without limitation, beverages, dairy products, sauces, oils, creams, custards, soups, purees, broths, vegetables, desserts, mayonnaise, wine, pet food, whey powder, etc.

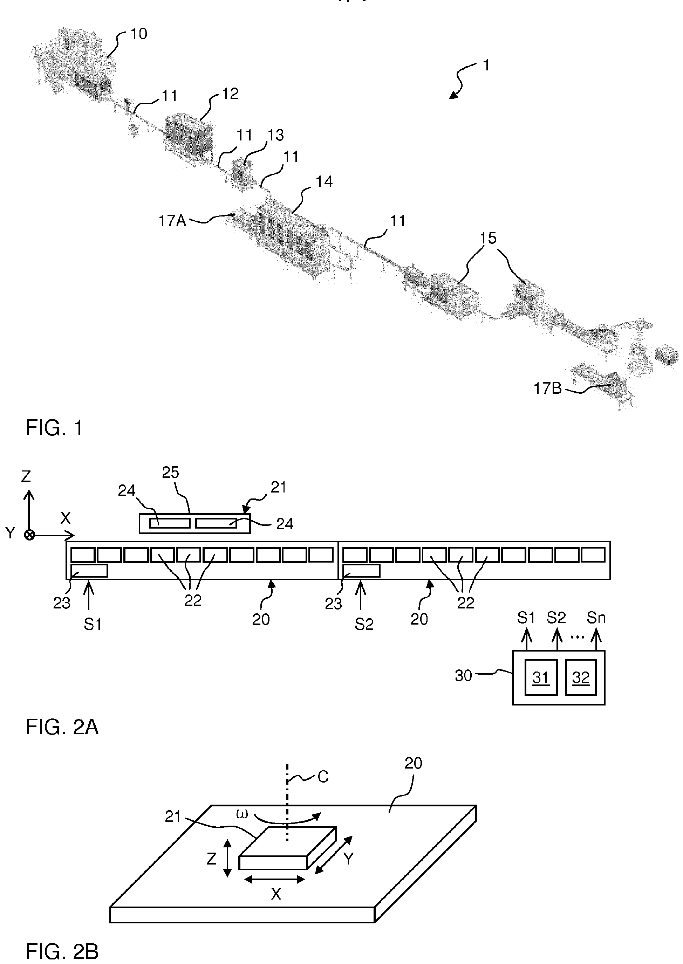

FIG. 1 is a schematic overview of an exemplifying production plant or system 1 which is configured to produce packaged food products. The food products are packaged in sealed containers or packages, which may be at least partly made of a paperboard material or a plastic material. For example, the container may be a carton or a bottle, which are well-known in the art. In the illustrated example, the system 1 comprises a sequence of machines 10, 12, 13, 14 and 15 connected by conveyors 11 for transporting packages from one machine to the next. A filling machine 10 is configured to fill a food product into containers and seal the container. An accumulator machine 12 is configured to, if necessary, accumulate packages produced by the filling machine 10. A straw application machine 13 is configured to attach a straw to the respective container. A wrapping machine 14 is configured to arrange the containers in groups and enclose each group of containers in wrapping material, e.g. stretch foil or shrink foil, to produce a wrapped container group 17A. A cardboard packing machine 15 is configured to arrange groups of containers in cardboard trays or cardboard cartons 17B and optionally also apply a wrapping material. The wrapping material, cardboard trays and cardboard cartons are commonly denoted "secondary packaging" in the art.

The illustrated examples start out from the insight that it would be advantageous to at least partly transport the containers within the system 1 by use of magnetically suspended "planar motors". Such planar motors are known in the field of photolithography and semiconductor processing, where they are implemented to provide micrometer- or nanometer-scale positioning of wafers or the like in clean spaces where particles must be kept at a minimum. Magnetically suspended planar motors, also known as maglev motors, are operable with minimum generation of contaminating particles due to low friction. Although these motivations are not primary objectives in the field of packaged food products, the present inventors have realized, by insightful reasoning, that it is both advantageous and viable to implement such planar motors in systems for production of packaged food products. Examples of magnetically suspended planar motors for micrometer- or nanometer-scale positioning are given in US6777833, US8686602, US6208045, US6259174 and US5641054.

Further examples of magnetically suspended planar motors are found in WO2006/054243, WO2009/083889, and the article *"*Electro-dynamic planar motor" by Compter et al., published in Proc. of Mechatronics 2002, University of Twente, 24-26 June 2002, pages 81-87.

The implementation of magnetically suspended planar motors in systems for production of packaged food products has the potential of reducing the need for external guides as well as mechanical bearings, which in turn leads to reduced wear and MTBF (Mean Time Between Failures). Ultimately, this results in reduced operating cost of the system. A magnetically suspended planar motor is effectively a direct drive mechanism, which enables dynamic control of position, velocity, acceleration and orientation (attitude) of a container or an array of containers. By proper implementation in the system, these properties may result in increased flexibility of production, e.g. with respect to changes in the format of the containers or changes in the required pattern of containers, e.g. for secondary packaging.

FIG. 2A illustrates an example of a magnetically suspended planar motor for use in the system of FIG. 1. The planar motor comprises a stationary (fixed) base element 20 with a planar top surface, and a moveable carrier 21 which is arranged to overlie the base element 20. As indicated in FIG. 2A, identical base elements 20 may be tiled in an X dimension, and possibly in a Y dimension (not shown), to define an extended transportation surface. The transportation surface may form a transportation track in the system 1, e.g. to replace at least part of one or more of the conveyors 11 in FIG. 1 or to transport containers within any one of the machines 10, 12, 13, 14 and 15 in FIG. 1. FIG. 2A includes an orthogonal XYZ coordinate system, in which the X dimension is parallel to the feed direction of such a transportation track, the Y dimension is a lateral dimension (orthogonal to the X dimension on the top surface of the base element 20), and the Z dimension is a levitation dimension (perpendicular to the top surface of the base element 20). As indicated schematically in FIG. 2A, the top surface of the carrier 21 defines a support surface 25 for carrying one or more containers in the system 1.

The respective base element 20 comprises a first magnetic arrangement, and the carrier 21 comprises a second magnetic arrangement. One of the magnetic arrangements is "active" and operable to selectively generate a magnetic field that interacts with the other magnetic arrangement, which is passive, to move or propel the carrier 21 in relation to the base element 20, at least in the X dimension, and preferably also in the Y dimension. In one embodiment, the magnetic field is generated by selectively applying commutation currents to an array of coils in the active magnetic arrangement. The active magnetic arrangement may be installed in either of the base element 20 and the carrier 21. In a currently preferred embodiment, the active magnetic arrangement is located in base element 20, to obviate the need to supply control signals and power signals to the moving carrier 21.

Consequently, in the example of FIG. 2A as well as the following examples, the first magnetic arrangement in the base element 20 is active and comprises an array of coils 22 and associated circuitry 23 for providing and/or generating commutation currents for the coils 22. The second magnetic arrangement in the carrier 21 comprises an array of magnets 24 and thus passive. A control device 30 is configured to generate control signals S1-Sn for the base elements 20 to control the movement of the carrier 21 on the base elements 20. The control signals S1-Sn may comprise the above-mentioned commutation signals for the coils 22 in the respective base element 21. Alternatively, if the circuitry 23 is configured to generate the commutation signals, the control device 30 may supply power to the respective base element 20 in addition to the control signals S1-Sn, which may designate a desired position or trajectory of the carrier 21 on the respective base element 20. As indicated in FIG. 2A, the control device 30 may operate the planar motor to levitate the carrier 21, by causing the coils 22 to generate a magnetic field that arranges the carrier 21 with a small spacing or gap between the bottom surface of the carrier 21 and the top surface of the respective base element 20.

The control device 30 may be further configured to generate control signals (not shown) for controlling and synchronizing operation of the system 1.

In the illustrated example, the control device 30 comprises a processor 31 and computer memory 32. The processor 30 may e.g. include one or more of a CPU ("Central Processing Unit"), a DSP ("Digital Signal Processor"), a microprocessor, a microcontroller, an ASIC ("Application-Specific Integrated Circuit"), a combination of discrete analog and/or digital components, or some other programmable logical device, such as an FPGA ("Field Programmable Gate Array"). A control program comprising computer instructions is stored in the memory 32 and executed by the processor 31 to generate the control signals S1 for the planar motor. The control program may be supplied to the control device 30 on a computer-readable medium, which may be a tangible (non-transitory) product (e.g. magnetic medium, optical disk, read-only memory, flash memory, etc) or a propagating signal.

FIG. 2B illustrates an example of the planar motor, in which the carrier 21 is independently controllable for movement in four degrees of freedom (DOF), specifically the X dimension, the Y dimension, the Z dimension and for rotation ω around an axis C which is perpendicular to the support surface 25 of the carrier 21. The rotation axis C may, but need not, be located at the geometric center of carrier 21.

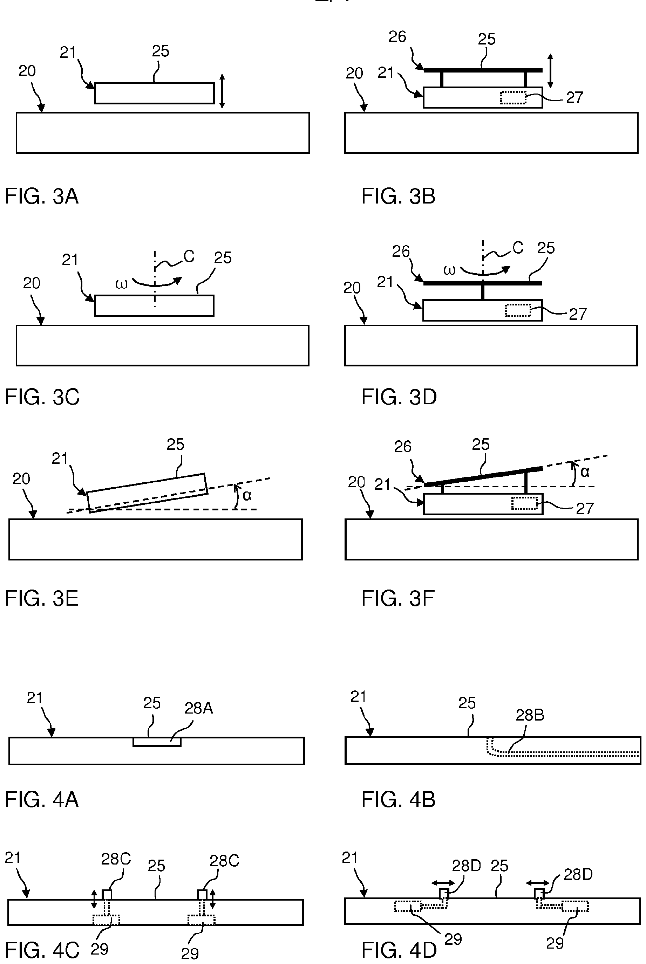

FIG. 3A illustrates an example of a planar motor, in which a change in the levitation of the carrier 21, in the Z dimension, may be effected by modifying the magnetic field generated by the first magnetic arrangement in the base element 20. Thereby, the support surface 25 may be controllably moved away from and towards the base element 21.

FIG. 3B illustrates an example, in which a moveable platform 26 is installed in the carrier 21 to define at least part of the support surface 25. A platform actuator 27 is arranged in the carrier 21 to translate the platform 27 away from and towards the carrier 21. This example may relax the requirements on the first and/or second magnetic arrangements. The actuator 27 may be any form of motor, e.g. electric, pneumatic, or hydraulic, which may be controlled by a control signal generated by the control device 30 and transmitted by wire or wirelessly to the carrier 21. In an alternative, the actuator 27 may be controlled by the magnetic field generated by the first magnetic arrangement in the base element 20. In a further alternative, the actuator is omitted and the movement of the platform 26 is controlled by the magnetic field generated by the first magnetic arrangement in the base element 20.

FIG. 3C illustrates an example of a planar motor, in which the rotation ω of the carrier 21 around the axis C may be effected by modifying the magnetic field generated by the first magnetic arrangement in the base element 20. Thereby, the support surface 25 may be controllably rotated with respect to an arbitrary reference direction in the XY plane.

FIG. 3D illustrates an example, in which a rotatable platform 26 is installed in the carrier 21 to define at least part of the support surface 25. Controlled rotation of the platform 26 may be effected in analogy with the embodiment in FIG. 3B, e.g. by actuator 27.

FIG. 3E illustrates an example of a planar motor, in which a change in tilt angle α of the carrier 21, e.g. in the X dimension or the Y dimension, may be effected by modifying the magnetic field generated by the first magnetic arrangement in the base element 20. Thereby, the support surface 25 may be controllably tilted from a horizontal plane.

FIG. 3F illustrates an embodiment, in which a moveable platform 26 is installed in the carrier 21 to define at least part of the support surface 25. The moveable platform 26 is arranged for tilting in at least one direction. Controlled tilting of the platform 26 may be effected in analogy with the embodiment in FIG. 3B, e.g. by actuator 27.

It should be understood that two or more of the examples in FIGS 3A-3F may be combined to provide any desirable number of DOF. For example, the planar motor as described herein may exhibit up to 6 independent DOF, including movement in the X, Y and Z dimensions, rotation around the axis C (also known as "yaw"), tilting in the X dimension (also known as "pitch") and tilting in the Y dimension (also known as "roll").

FIGS 4A-4D show examples of gripping mechanisms for holding one or more containers (not shown) onto the support surface 25. In FIG. 4A, the gripping mechanism comprises one or more electromagnets 28A for generating a magnetic field to attract the bottom surface of the respective container which, in this example, comprises a ferromagnetic material. In FIG. 4B, the gripping mechanism comprises a conduit 28B that opens into the support surface 25 and is connected to a source (not shown) for generating a sub-atmospheric pressure. In FIG. 4C, the gripping mechanism comprises one or more projection elements 28C (two shown), which are moveable in a direction perpendicular to the support surface 25 between a retraced state in which the respective projection element 28C is located level with or beneath the support surface 25, and a projecting state in which the respective projection element 28C projects from the support surface 25 to define a containment region that mates with one or more containers. In FIG. 4D, the gripping mechanism comprises projection elements 28D (two shown), which are moveable in a direction parallel to the support surface 25 to be pressed against one or more containers on the support surface 25. In one example, the projection elements 28D may be arranged and configured similar to jaws of a mechanical chuck. As indicated in FIGS 4C and 4D, one or more actuators 29 (two shown) may be arranged in the carrier 21 to move the projection elements 28C, 28D. The actuator(s) 29 may be any form of motor, e.g. electric, pneumatic, or hydraulic. The gripping mechanisms in FIGS 4A-4D are "active", in the sense that they may be selectively operated to switch between engaging and releasing the container(s) on the support surface 25, e.g. based on a control signal from the control device 30 (FIG. 1).

In an alternative, the respective carrier 21 comprises a passive gripping mechanism, e.g. one or more fixed projections (cf. FIG. 4C), one or more permanent magnets (cf. FIG. 4A), or a high friction surface structure. It is also conceivable that the gripping mechanism is omitted.

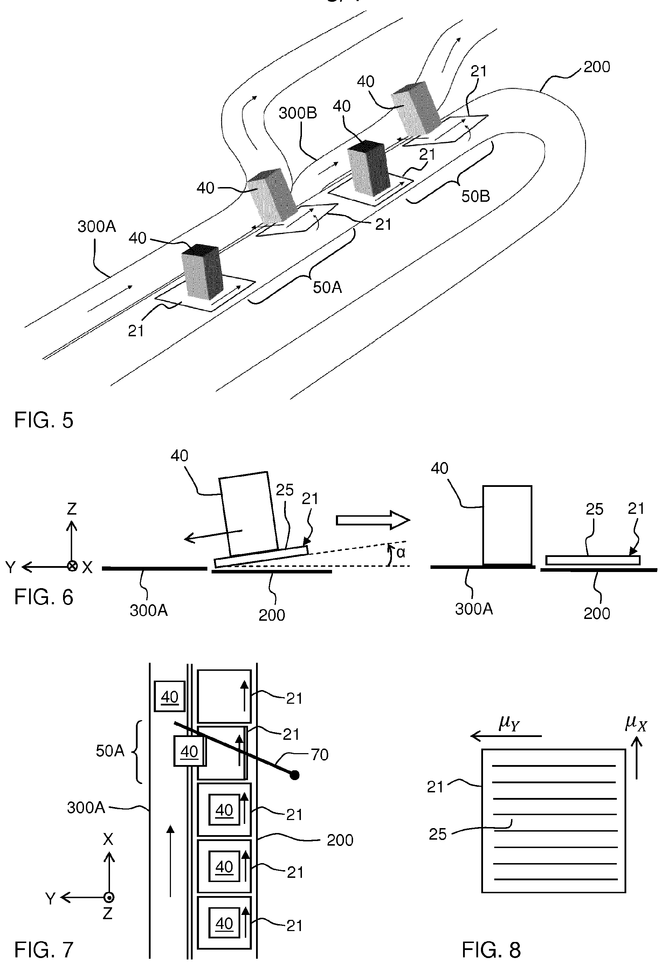

The inventors have realized that the tilting function as exemplified in FIGS 3C-3D may provide distinct advantages when used in a system for production of packaged food products. Related examples will be described with reference to FIGS 5-10.

FIG. 5 illustrates containers 40 that are transported on a stationary transportation track 200 which comprises a tiled pattern of base elements (20 in FIG. 2A). The first magnetic arrangements of the tiled base elements may be seen to collectively form a first magnetic arrangement of the transportation track 200, which is connected to receive the control signals S1-Sn from the control device (30 in FIG. 2A).

In FIG. 5, a trail of carriers 21 are propelled in the feed direction along the track 200, and an upstream machine (e.g. the filling machine 10 in FIG. 1) has placed one container 40 on each carrier 21. The track 200 is arranged to extend adjacent (i.e. alongside) a first conveyor 300A at a first diversion location 50A and adjacent a second conveyor 300B at a second diversion location 50B. As seen in FIG. 5, a selected carrier 21 is intermittently tilted at the respective diversion location 50A, 50B, thereby causing the container 40 on the selected carrier 21 to slide along the support surface 25 onto the respective conveyor 300A, 300B. The first and second conveyors 300A, 300B may be of any conventional type, including but not limited to belt conveyor, chain conveyor and roller conveyor. Alternatively, one or more of the conveyors 300A, 300B may be configured as a planar motor in correspondence with the track 200.

Although not shown in FIG. 5, it is conceivable that more than one container 40 is arranged on the respective carrier 21. Further, the container(s) may be arranged with any side facing the support surface 25, e.g. in an upright position (as shown), or a lying position.

With reference to FIG. 1, the diversion of containers exemplified in FIG. 5 may be implemented in any one of the conveyors 11 or within any one of the machines 10, 12-15.

The diversion of containers 40 by tilting may replace conventional mechanical diverters which are structurally complicated, add cost, require maintenance, and take up space in the system 1. Further, the diversion may be made selectively for individual carriers 40 at any available diversion location 50A, 50B along the track 200, giving flexibility to the system 1 without requiring major structural modifications.

As illustrated in FIG. 5, the diversion by tilting may be performed while the selected carrier 21 is moving past the diversion location 50A, 50B, thereby enabling high transportation rate of containers along the track 200 and on the respective conveyor 300A, 300B.

As understood from the foregoing, the diversion by tilting may be controlled by control signals generated by the control device 30.

FIG. 6 illustrates the diversion by tilting at the first diversion location 50A in FIG. 5 in further detail. Here, the feed direction X of the carriers 21 is parallel to the feed direction of the conveyor 300A, and the selected carrier 21 is tilted in the lateral dimension Y. The tiling angle α (roll angle) is set so that the container 40, by action of gravity, overcome the friction on the support surface 25 and slides along the support surface 25 onto the conveyor 300A. If the carrier 21 comprises an active gripping mechanism (cf. FIGS 4A-4D), this mechanism is operated to release the container 40 on the carrier 21 before or while the carrier 21 is tilted. As shown to the right in FIG. 6, the selected carrier 21 is then returned to a horizontal position and continues to move in the feed direction X along the track 200.

It may be noted that the respective carrier 21 may be controllable for movement not only in the X direction but also in the Y direction on the track 200.

In one embodiment, the speed of the respective carrier 21 in the feed direction X is adapted to the speed of the conveyor 300A, 300B in the same direction at the respective diversion location 50A, 50B, to ensure a smooth transfer of the respective container 40 from the carrier 21 to the conveyor 300A, 300B.

FIGS 7-8 illustrate example embodiments for augmenting the sliding action of the container 40 on the support surface 25. According to the invention as shown in FIG. 7, a guiding element 70, e.g. a rail, is arranged to extend over the track 200 at the diversion location 50A with an inclination towards the conveyor 300A. The guiding element 70 is arranged with a spacing to the track 200 to allow the moving carriers 21 to pass beneath the guiding element 70, whereas the containers 40 on the moving carriers 21 engage the guiding element 70 and are guided to slide along the support surface 25 towards the conveyor 300A. In the embodiment of FIG. 8, the support surface 21 is configured with anisotropic friction properties, where the friction coefficient µ_{Y} in the lateral dimension Y is smaller than the friction coefficient µ_{X} in the feed dimension X. Thereby, the sliding action of the container 40 on the support surface 25 is selectively augmented in the lateral dimension Y.

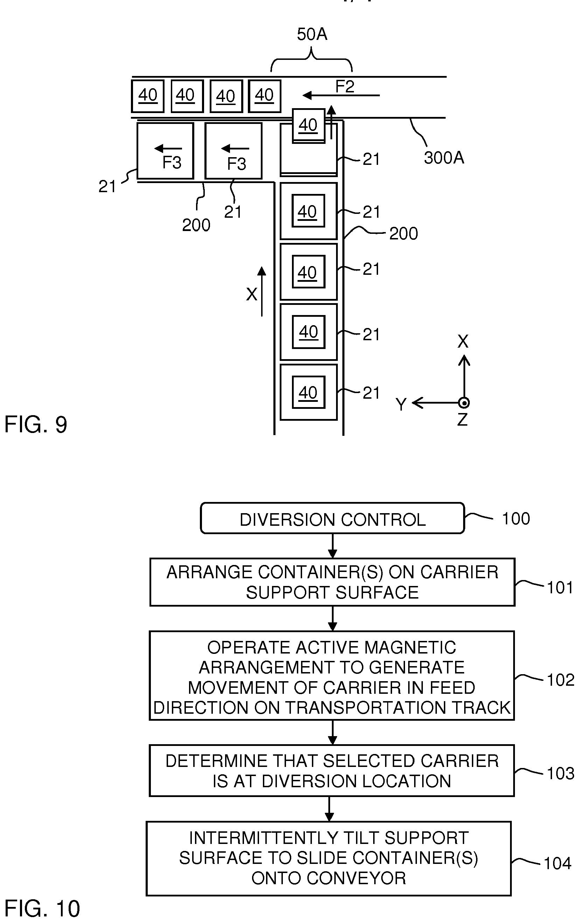

FIG. 9 illustrate an embodiment in which the feed direction X of the carriers 21 on the track 200 is perpendicular to the feed direction F2 of the conveyor 300A at the diversion location 50A. In this embodiment, as shown, the selected carrier 21 may be stopped at the diversion location 50A and tilted in the feed direction X to slide the container 40 from the carrier 21 onto the conveyor 300A, which may or may not be stopped each time a container 40 is diverted onto the conveyor 300A. As shown in FIG. 9, the track 200 may extend at right angles from the diversion location 50A, to allow the empty carriers 21 to be moved, in direction F3, for subsequent use in transporting containers 40 in the system.

Reverting to FIGS 5-7, it is equally possible that the selected carrier 21 is stopped at the diversion location 50A, 50B before its support surface 25 is tilted to transfer the container 40 onto the conveyor 300A, 300B. In such an example, the conveyor 300A, 300B is preferably stopped in synchronization with the respective carrier 21.

The sequence of events described above with reference to FIGS 5-9 may correspond to a diversion control method 90 shown in FIG. 10. In step 101, one or more containers 40 are arranged on the support surface 25 of a respective carrier 21, which is located on the track 200. The container(s) 40 may or may not be filled with the food product at this stage. In step 102, the active magnetic arrangement (in the track 200 or the carrier 21, depending on implementation) is operated to generate movement of the respective carrier 21 in the feed direction X along the track 200. In step 103, it is determined if a selected carrier 21, among the carriers that are arranged on the track 200, is located at the diversion location 50A, 50B. In step 104, at the appropriate time point, the support surface 25 of the selected carrier 21 is intermittently tilted (by tilting the carrier 21 and/or the platform 26, depending on implementation) to slide the one or more containers 40 along the support surface 25 onto the conveyor 300A, 300B. The method 90 may be executed based on control signals from the control device 30 in FIG. 2A.

## Claims

1. An apparatus for transporting containers (40) in a system for production of packaged food products, said apparatus comprising:
a transportation track (200), and
a plurality of carriers (21) for arrangement on the transportation track (200), the respective carrier (21) comprising a support surface (25) which is configured to carry one or more of the containers (40),
wherein the transportation track (200) comprises a first magnetic arrangement (22, 23), and the respective carrier (21) comprises a second magnetic arrangement (24),
said apparatus further comprising a control device (30) which is configured to operate one of the first and second magnetic arrangements (22, 23; 24) to generate a movement of the respective carrier (21) in a feed direction (X) on the transportation track (200),
wherein the transportation track (200) is arranged to extend adjacent to a conveyor (300A, 300B) at a diversion location (50A, 50B) along the transportation track (200), wherein the control device (30) is further configured to, when a selected carrier (21) among the carriers is located at the diversion location (50A, 50B), intermittently tilt the support surface (25) of the selected carrier (21) to slide the one or more containers (40) along the support surface (25) onto the conveyor (300A, 300B),
**characterized in that** said apparatus further comprises a guiding element (70) which is located above the transportation track (200) at the diversion location (50A, 50B) to guide the one or more containers (40) along the support surface (25) onto the conveyor (300A, 300B).

2. The apparatus of claim 1, wherein the control device (30) is configured to intermittently tilt the support surface (25) of the selected carrier (21) while controlling the selected carrier (21) to move in the feed direction (X).

3. The apparatus of claim 1 or 2, wherein the control device (30) is configured to adapt the speed of the selected carrier (21) in the feed direction (X) to the speed of the conveyor (300A, 300B) in the feed direction (X) at the diversion location (50A, 50B).

4. The apparatus of any preceding claim, wherein the guiding element (70) is stationary and arranged to guide the containers (40) on the selected carrier (21) when moving in the feed direction (X).

5. The apparatus of any preceding claim, wherein the transportation track (200) is arranged with the feed direction (X) in parallel to the conveyor (300A, 300B) at the diversion location (50A, 50B), and wherein the control device (30) is configured to intermittently tilt the support surface (25) of the selected carrier (21) in a lateral direction (Y) which is perpendicular to the feed direction (X).

6. The apparatus of claim 5, wherein the support surface (25) of the selected carrier (21) is configured with a lower friction coefficient (Y) in the lateral direction than in the feed direction (X).

7. The apparatus of claim 1 or 2, wherein the transportation track (200) is arranged with the feed direction (X) being transverse to the conveyor (300A, 300B) at the diversion location (50A, 50B), wherein the control device (30) is configured to stop the selected carrier (21) at the diversion location (50A) and intermittently tilt the support surface (25) of the selected carrier (21) in the feed direction (X).

8. The apparatus of any preceding claim, wherein the control device (30) is configured to operate at least one of the first and second magnetic arrangements (22, 23; 24) to tilt the selected carrier (21).

9. The apparatus of any preceding claim, wherein the respective carrier (21) comprises a moveable platform (26) that defines at least part of the support surface (25) and a platform actuator (27) for moving the platform (26) in relation to the carrier (21), wherein the control device (30) is configured to operate the platform actuator (27) to tilt the support surface (25) of the selected carrier (21).

10. The apparatus of any preceding claim, wherein the respective carrier (21) comprises a gripping mechanism (28A; 28B; 28C; 28D) for engaging the one or more containers (40) on the support surface (25), and wherein the control device (30) is configured to intermittently deactivate the gripping mechanism (28A; 28B; 28C; 28D) of the selected carrier (21) to release the container (40) when the support surface (25) is tilted.

11. The apparatus of any preceding claim, wherein the first magnetic arrangement (22, 23) comprises an array of coils (22), and the second magnetic arrangement comprises an array of magnets (24).

12. The apparatus of any preceding claim, wherein the control device (30) is further configured to operate at least one of the first and second magnetic arrangements (22, 23; 24) to levitate the respective carrier (21) over the transportation track (200) during the movement in the feed direction (X).

13. A method of transporting containers (40) in a system for production of packaged food products, said method comprising:
arranging (101) one or more of the containers (40) on a support surface (25) of a respective carrier (21) on a transportation track (200),
operating (102) one of a first magnetic arrangement (22, 23) in the transportation track (200) and a second magnetic arrangement (24) in the respective carrier (21) to generate a movement of the respective carrier (21) in a feed direction (X) on the transportation track (200),
determining (103) that a selected carrier (21) is located at a diversion location (50A, 50B) along the transportation track (200), at which the transportation track (200) extends adjacent to a conveyor (300A, 300B),
controlling (104) the respective carrier (21) to intermittently tilt the support surface (25) to slide the one or more containers (40) along the support surface (25) onto the conveyor (300A, 300B), and
guiding the one or more containers (40) along the support surface (25) onto the conveyor (300A, 300B) by engaging a guiding element (70) which is located above the transportation track (200) at the diversion location (50A, 50B) to guide.

14. A computer readable medium comprising computer instructions which, when executed by a processing device (31) of the control device (30) of the apparatus of claim 1, causes the apparatus of claim 1 to perform the method steps according to claim 13.

## Patentansprüche

1. Vorrichtung zum Transportieren von Behältern (40) in einem System zur Herstellung von verpackten Lebensmittelprodukten, wobei die Vorrichtung folgende Elemente umfasst:
eine Transportbahn (200), und
eine Vielzahl von Trägern (21) zur Anordnung auf der Transportbahn (200), wobei der jeweilige Träger (21) eine Auflagefläche (25) umfasst, die dafür ausgelegt ist, einen oder mehrere der Behälter (40) zu tragen,
wobei die Transportbahn (200) eine erste Magnetanordnung (22, 23) umfasst und der jeweilige Träger (21) eine zweite Magnetanordnung (24) umfasst,
wobei die Vorrichtung ferner eine Steuervorrichtung (30) umfasst, die dafür ausgelegt ist, eine von der ersten und der zweiten Magnetanordnung (22, 23; 24) zu betätigen, zu dem Zweck, eine Bewegung des jeweiligen Trägers (21) in einer Vorschubrichtung (X) auf der Transportbahn (200) zu erzeugen,
wobei die Transportbahn (200) so angeordnet ist, dass sie sich benachbart zu einem Förderer (300A, 300B) an einer Umleitungsstelle (50A, 50B) entlang der Transportbahn (200) erstreckt, wobei die Steuervorrichtung (30) ferner so ausgelegt ist, dass sie, wenn sich ein ausgewählter Träger (21) unter den Trägern an der Umleitungsstelle (50A, 50B) befindet, die Auflagefläche (25) des ausgewählten Trägers (21) intermittierend neigt, um den einen oder die mehreren Behälter (40) entlang der Auflagefläche (25) auf den Förderer (300A, 300B) gleiten zu lassen,
**dadurch gekennzeichnet, dass** die Vorrichtung ferner ein Führungselement (70) umfasst, das oberhalb der Transportbahn (200) an der Umleitungsstelle (50A, 50B) angeordnet ist, zu dem Zweck, den einen oder die mehreren Behälter (40) entlang der Auflagefläche (25) auf den Förderer (300A, 300B) zu führen.

2. Vorrichtung nach Anspruch 1, wobei die Steuervorrichtung (30) dafür ausgelegt ist, die Auflagefläche (25) des ausgewählten Trägers (21) intermittierend zu neigen, während sie den ausgewählten Träger (21) zur Bewegung in der Vorschubrichtung (X) steuert.

3. Vorrichtung nach Anspruch 1 oder 2, wobei die Steuervorrichtung (30) dafür ausgelegt ist, die Geschwindigkeit des ausgewählten Trägers (21) in der Vorschubrichtung (X) an die Geschwindigkeit des Förderers (300A, 300B) in der Vorschubrichtung (X) an der Umleitungsstelle (50A, 50B) anzupassen.

4. Vorrichtung nach einem der vorhergehenden Ansprüche, wobei das Führungselement (70) stationär und dazu angeordnet ist, die Behälter (40) auf dem ausgewählten Träger (21) zu führen, wenn sie sich in der Vorschubrichtung (X) bewegen.

5. Vorrichtung nach einem der vorhergehenden Ansprüche, wobei die Transportbahn (200) mit der Vorschubrichtung (X) parallel zum Förderer (300A, 300B) an der Umleitungsstelle (50A, 50B) angeordnet ist, und wobei die Steuervorrichtung (30) dafür ausgelegt ist, die Auflagefläche (25) des ausgewählten Trägers (21) intermittierend in einer seitlichen Richtung (Y) zu neigen, die senkrecht zur Vorschubrichtung (X) ist.

6. Vorrichtung nach Anspruch 5, wobei die Auflagefläche (25) des ausgewählten Trägers (21) in der seitlichen Richtung (Y) mit einem geringeren Reibungskoeffizienten als in der Vorschubrichtung (X) ausgelegt ist.

7. Vorrichtung nach Anspruch 1 oder 2, wobei die Transportbahn (200) so angeordnet ist, dass die Vorschubrichtung (X) an der Umleitungsstelle (50A, 50B) quer zum Förderer (300A, 300B) verläuft, wobei die Steuervorrichtung (30) dafür ausgelegt ist, den ausgewählten Träger (21) an der Umleitungsstelle (50A) anzuhalten und die Auflagefläche (25) des ausgewählten Trägers (21) intermittierend in der Vorschubrichtung (X) zu neigen.

8. Vorrichtung nach einem der vorhergehenden Ansprüche, wobei die Steuervorrichtung (30) dafür ausgelegt ist, mindestens eine von der ersten und der zweiten Magnetanordnung (22, 23; 24) zum Neigen des ausgewählten Trägers (21) zu betätigen.

9. Vorrichtung nach einem der vorhergehenden Ansprüche, wobei der jeweilige Träger (21) eine bewegliche Plattform (26), die zumindest einen Teil der Auflagefläche (25) definiert, und ein Plattformstellglied (27) zum Bewegen der Plattform (26) in Bezug auf den Träger (21) umfasst, wobei die Steuervorrichtung (30) dafür ausgelegt ist, das Plattformstellglied (27) zum Neigen der Auflagefläche (25) des ausgewählten Trägers (21) zu betätigen.

10. Vorrichtung nach einem der vorhergehenden Ansprüche, wobei der jeweilige Träger (21) einen Greifmechanismus (28A; 28B; 28C; 28D) zum Ergreifen des einen oder der mehreren Behälter (40) auf der Auflagefläche (25) umfasst, und wobei die Steuervorrichtung (30) dafür ausgelegt ist, den Greifmechanismus (28A; 28B; 28C; 28D) des ausgewählten Trägers (21) intermittierend zu deaktivieren, um den Behälter (40) freizugeben, wenn die Auflagefläche (25) geneigt wird.

11. Vorrichtung nach einem der vorhergehenden Ansprüche, wobei die erste Magnetanordnung (22, 23) ein Array von Spulen (22) und die zweite Magnetanordnung ein Array von Magneten (24) umfasst.

12. Vorrichtung nach einem der vorhergehenden Ansprüche, wobei die Steuervorrichtung (30) ferner dafür ausgelegt ist, mindestens eine von der ersten und der zweiten Magnetanordnung (22, 23; 24) so zu betätigen, dass der jeweilige Träger (21) während der Bewegung in der Vorschubrichtung (X) über der Transportbahn (200) schwebt.

13. Verfahren zum Transportieren von Behältern (40) in einem System zur Herstellung von verpackten Lebensmittelprodukten, wobei das Verfahren umfasst:
Anordnen (101) eines oder mehrerer der Behälter (40) auf einer Auflagefläche (25) eines entsprechenden Trägers (21) auf einer Transportbahn (200),
Betätigen (102) einer ersten Magnetanordnung (22, 23) in der Transportbahn (200) und einer zweiten Magnetanordnung (24) im jeweiligen Träger (21) zum Erzeugen einer Bewegung des jeweiligen Trägers (21) in einer Vorschubrichtung (X) auf der Transportbahn (200),
Bestimmen (103), dass sich ein ausgewählter Träger (21) an einer Umleitungsstelle (50A, 50B) entlang der Transportbahn (200) befindet, an der sich die Transportbahn (200) angrenzend an einen Förderer (300A, 300B) erstreckt,
Steuern (104) des jeweiligen Trägers (21) zum intermittierenden Neigen der Auflagefläche (25), um den einen oder die mehreren Behälter (40) entlang der Auflagefläche (25) auf den Förderer (300A, 300B) gleiten zu lassen, und
Führen des einen oder der mehreren Behälter (40) entlang der Auflagefläche (25) auf den Förderer (300A, 300B) durch Eingreifen eines Führungselements (70), das oberhalb der Transportbahn (200) an der Umleitungsstelle (50A, 50B) zur Führung angeordnet ist.

14. Computerlesbares Medium, umfassend Computeranweisungen, die bei ihrer Ausführung durch eine Verarbeitungsvorrichtung (31) der Steuervorrichtung (30) der Vorrichtung nach Anspruch 1 die Vorrichtung nach Anspruch 1 veranlassen, die Verfahrensschritte nach Anspruch 13 durchzuführen.

## Revendications

1. Appareil de transport de récipients (40) dans un système de production de produits alimentaires conditionnés, ledit appareil comportant :
une piste (200) de transport, et
une pluralité de porteurs (21) destinés à être disposés sur la piste (200) de transport, le porteur (21) considéré comportant une surface (25) d'appui qui est configurée pour supporter un ou plusieurs des récipients (40),
la piste (200) de transport comportant un premier agencement magnétique (22, 23), et le porteur (21) considéré comportant un second agencement magnétique (24) ,
ledit appareil comportant en outre un dispositif (30) de commande qui est configuré pour faire fonctionner un des premier et second agencements magnétiques (22, 23 ; 24) pour générer un mouvement du porteur (21) considéré dans une direction (X) d'avance sur la piste (200) de transport,
la piste (200) de transport étant disposée pour s'étendre de façon adjacente à un convoyeur (300A, 300B) à un emplacement (50A, 50B) de déviation le long de la piste (200) de transport, le dispositif (30) de commande étant en outre configuré pour, lorsqu'un porteur (21) sélectionné parmi les porteurs est situé à l'emplacement (50A, 50B) de déviation, incliner par intermittence la surface (25) d'appui du porteur (21) sélectionné pour faire glisser le ou les récipients (40) le long de la surface (25) d'appui jusque sur le convoyeur (300A, 300B),
**caractérisé en ce que** ledit appareil comporte en outre un élément (70) de guidage qui est situé au-dessus de la piste (200) de transport à l'emplacement (50A, 50B) de déviation pour guider le ou les récipients (40) le long de la surface (25) d'appui jusque sur le convoyeur (300A, 300B).

2. Appareil selon la revendication 1, le dispositif (30) de commande étant configuré pour incliner par intermittence la surface (25) d'appui du porteur (21) sélectionné tout en commandant le porteur (21) sélectionné pour qu'il se déplace dans la direction (X) d'avance.

3. Appareil selon les revendications 1 ou 2, le dispositif (30) de commande étant configuré pour adapter la vitesse du porteur (21) sélectionné dans la direction (X) d'avance à la vitesse du convoyeur (300A, 300B) dans la direction (X) d'avance à l'emplacement (50A, 50B) de déviation.

4. Appareil selon l'une quelconque des revendications précédentes, l'élément (70) de guidage étant fixe et disposé pour guider les récipients (40) sur le porteur (21) sélectionné lorsqu'il se déplace dans la direction (X) d'avance.

5. Appareil selon l'une quelconque des revendications précédentes, la piste (200) de transport étant disposée de telle façon que la direction (X) d'avance soit parallèle au convoyeur (300A, 300B) à l'emplacement (50A, 50B) de déviation, et le dispositif (30) de commande étant configuré pour incliner par intermittence la surface (25) d'appui du porteur (21) sélectionné dans une direction latérale (Y) qui est perpendiculaire à la direction (X) d'avance.

6. Appareil selon la revendication 5, la surface (25) d'appui du porteur (21) sélectionné étant configurée avec un plus faible coefficient de frottement dans la direction latérale (Y) que dans la direction (X) d'avance.

7. Appareil selon la revendication 1 ou 2, la piste (200) de transport étant disposée de telle façon que la direction (X) d'avance soit transverse au convoyeur (300A, 300B) à l'emplacement (50A, 50B) de déviation, le dispositif (30) de commande étant configuré pour arrêter le porteur (21) sélectionné à l'emplacement (50A) de déviation et incliner par intermittence la surface (25) d'appui du porteur (21) sélectionné dans la direction (X) d'avance.

8. Appareil selon l'une quelconque des revendications précédentes, le dispositif (30) de commande étant configuré pour faire fonctionner au moins un des premier et second agencements magnétiques (22, 23 ; 24) pour incliner le porteur (21) sélectionné.

9. Appareil selon l'une quelconque des revendications précédentes, le porteur (21) considéré comportant une plate-forme mobile (26) qui définit au moins une partie de la surface (25) d'appui et un actionneur (27) de plate-forme servant à déplacer la plate-forme (26) par rapport au porteur (21), le dispositif (30) de commande étant configuré pour faire fonctionner l'actionneur (27) de plate-forme afin d'incliner la surface (25) d'appui du porteur (21) sélectionné.

10. Appareil selon l'une quelconque des revendications précédentes, le porteur (21) considéré comportant un mécanisme (28A ; 28B ; 28C ; 28D) de préhension servant à interagir avec le ou les récipients (40) sur la surface (25) d'appui, et le dispositif (30) de commande étant configuré pour désactiver par intermittence le mécanisme (28A ; 28B ; 28C ; 28D) de préhension du porteur (21) sélectionné afin de libérer le récipient (40) lorsque la surface (25) d'appui est inclinée.

11. Appareil selon l'une quelconque des revendications précédentes, le premier agencement magnétique (22, 23) comportant une batterie de bobines (22), et le second agencement magnétique comportant une batterie d'aimants (24) .

12. Appareil selon l'une quelconque des revendications précédentes, le dispositif (30) de commande étant en outre configuré pour faire fonctionner au moins un des premier et second agencements magnétiques (22, 23 ; 24) pour faire léviter le porteur (21) considéré au-dessus de la piste (200) de transport pendant le mouvement dans la direction (X) d'avance.

13. Procédé de transport de récipients (40) dans un système de production de produits alimentaires conditionnés, ledit procédé comportant les étapes consistant à :
disposer (101) un ou plusieurs des récipients (40) sur une surface (25) d'appui d'un porteur (21) considéré sur une piste (200) de transport,
faire fonctionner (102) un agencement parmi un premier agencement magnétique (22, 23) dans la piste (200) de transport et un second agencement magnétique (24) dans le porteur (21) considéré pour générer un mouvement du porteur (21) considéré dans une direction (X) d'avance sur la piste (200) de transport,
déterminer (103) qu'un porteur (21) sélectionné est situé à un emplacement (50A, 50B) de déviation le long de la piste (200) de transport, au niveau duquel la piste (200) de transport s'étend de façon adjacente à un convoyeur (300A, 300B),
commander (104) le porteur (21) considéré pour incliner par intermittence la surface (25) d'appui afin de faire glisser le ou les récipients (40) le long de la surface (25) d'appui jusque sur le convoyeur (300A, 300B), et guider le ou les récipients (40) le long de la surface (25) d'appui jusque sur le convoyeur (300A, 300B) en faisant agir un élément (70) de guidage qui est situé au-dessus de la piste (200) de transport à l'emplacement (50A, 50B) de déviation pour le guidage.

14. Support lisible par ordinateur comportant des instructions informatiques qui, lorsqu'elles sont exécutées par un dispositif (31) de traitement du dispositif (30) de commande de l'appareil selon la revendication 1, amènent l'appareil selon la revendication 1 à réaliser les étapes de procédé selon la revendication 13.
